# EUROPÄISCHE PATENTSCHRIFT

(11) **EP 2 255 071 B1**
(45) Veröffentlichungstag und Bekanntmachung des Hinweises auf die Patenterteilung: **03.01.2018**
(21) Anmeldenummer: 08873672.3
(22) Anmeldetag: 03.11.2008
(51) Int. Cl.: F01D 5/06

(54) **TURBINENROTOR FÜR EINE GASTURBINE**
TURBINE ROTOR FOR A GAS TURBINE
ROTOR DE TURBINE À GAZ

(30) Priorität: 26.03.2008 DE 102008015688
(43) Veröffentlichungstag der Anmeldung: 01.12.2010
(73) Patentinhaber: MAN Diesel & Turbo SE, 86153 Augsburg (DE)
(72) Erfinder: ASCHENBRUCK, Emil, 47167 Duisburg (DE); MÜLLER, Ralf, 45134 Essen (DE); BLASWICH, Michael, 46045 Oberhausen (DE)
(86) Internationale Anmeldenummer: PCT/EP2008/009258
(87) Internationale Veröffentlichungsnummer: WO 2009/118036

(56) Entgegenhaltungen:
- EP-A- 1 321 626
- WO-A-2004/076820
- CH-A- 225 640
- DE-A1- 2 135 088
- DE-B1- 2 643 886
- FR-A- 1 282 459

## Beschreibung

Die Erfindung betrifft einen Turbinenrotor für eine Gasturbine, eine Gasturbine mit einem solchen Turbinenrotor, einen Zuganker für einen solchen Turbinenrotor sowie ein Verfahren zur Montage eines Turbinenrotor in einer Gasturbine. Gasturbinenrotoren oder -läufer weisen einen Kompressor- und einen Turbinenbereich auf, wobei wenigstens der Kompressorbereich, häufig auch der Turbinenbereich in Scheibenbauweise mehrteilig aus wenigstens zwei Kompressor- bzw. Turbinenscheiben zusammengesetzt sein kann. Die Scheiben werden dabei bevorzugt untereinander mittels Zentrierungen zueinander positioniert und sind über sogenannte Zuganker zum Läuferverbund verspannt. Ist ein Gehäuse der Gasturbine durchgängig, beispielsweise horizontal, geteilt, kann der Gasturbinenrotor vorab komplett montiert und gewuchtet werden, bevor er als Ganzes im Gehäuse angeordnet wird.

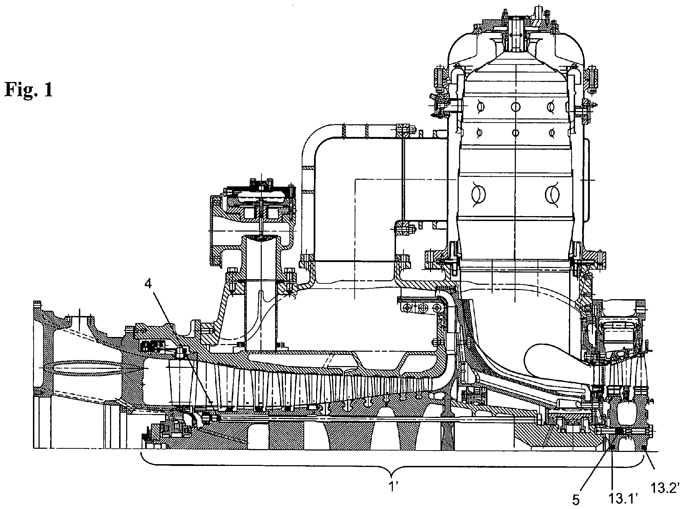

Bei der in Fig. 1 dargestellten, betriebsintern bekannten Gasturbine mit horizontal geteiltem Gehäuse im Kompressorbereich und einteiligem Gehäuse im Turbinenbereich kann der Gasturbinenrotor 1' jedoch zum Einbau nicht komplett vormontiert werden. In diesem Fall wird bisher zunächst der Kömpressorbereich mittels mehrerer dezentraler Zuganker 4 verspannt und in das Kompressorgehäuse eingelegt. Anschließend wird das Kompressorgehäuse geschlossen und das einteiligen Turbinengehäuse montiert. Hierbei wird der Turbinenbereich in Form einzelner Turbinenscheiben 13.1', 13.2' im Wechsel mit dem Turbinengehäuse an dem Gasturbinenrotor befestigt. Die Befestigung der Turbinenscheiben 13.1', 13.2' untereinander und am Kompressorbereich geschieht dabei über separate dezentrale Zuganker 5.

Aus der DE 26 43 886 A1 ist ein Gasturbinenläufer in Scheibenbauweise bekannt, der mittels Zuganker die Kompressorscheiben bzw. die Turbinenscheiben abstützt. Aus der DE 21 35 088 A1 ist ebenfalls eine solche Rotoranordnung bekannt.

Dieser Aufbau ist aufwändig und weist aufgrund der axial geteilten Zuganker 4, 5 eine geringere Festigkeit auf.

Aufgabe der vorliegenden Erfindung ist es daher, einen Turbinenrotor für eine Gasturbine zu verbessern.

Diese Aufgabe wird durch eine Turbinenrotor mit den Merkmalen des Anspruchs 1 gelöst. Anspruch 7 stellt eine Gasturbine mit einem solchen Turbinenrotor, und Anspruch 8 ein Verfahren zur Montage eines solchen Turbinenrotors in einer Gasturbine unter Schutz. Die Unteransprüche betreffen vorteilhafte Weiterbildungen.

Ein erfindungsgemäßer Turbinenrotor für eine Gasturbine umfasst einen aus zwei oder mehr Kompressorscheiben zusammengesetzten Kompressorbereich und einen aus einer oder mehreren, bevorzugt zwei oder mehreren Turbinenscheiben zusammengesetzten Turbinenbereich, wobei Kompressor- und Turbinenscheiben eine ("Singledisk") oder mehrere ("Multidisk") Laufschaufelreihen tragen können. Die Kompressor- und Turbinenscheiben sind durch eine Zugankeranordnung miteinander verspannt, die einen, bevorzugt mit der Längsachse des Turbinenrotors koaxialen, i.e. zentralen Zuganker oder mehrere, bevorzugt zur Längsachse des Turbinenrotors parallele und in Umfangsrichtung äquidistant verteilten, i.e. dezentrale Zuganker aufweist.

Ein oder mehrere, bevorzugt alle Zuganker der Zugankeranordnung weisen einen ersten Befestigungsbereich und einen zweiten Befestigungsbereich zur Verspannung von zwei oder mehr, bevorzugt von allen Kompressorscheiben des Kompressorbereichs zwischen dem ersten und dem zweiten Befestigungsbereich auf. Wenigstens einer, bevorzugt mehrere, besonders bevorzugt alle dieser, vorteilhafterweise axial einteilig ausgebildeten, Zuganker weisen zusätzlich einen dritten Befestigungsbereich zur Verspannung von einer oder mehreren, bevorzugt von allen Turbinenscheiben des Turbinenbereichs auf.

Erfindungsgemäß werden also Kompressor- und Turbinenscheiben über den- bzw. dieselben Zuganker verspannt, wobei, wie nachfolgend näher erläutert, zur Vormontage des Kompressorbereichs ein zweiter Befestigungsbereich vorgesehen ist, durch den Kompressorscheiben gegeneinander vorgespannt werden können.

Ein Turbinenrotor nach einer Ausführung der vorliegenden Erfindung kann daher in einem Gehäuse einer Gasturbine, welches nicht durchgehend geteilt ist, montiert werden, indem zunächst zwei oder mehr, insbesondere alle Kompressorscheiben des Kompressorbereichs durch den oder die Zuganker zwischen dem ersten und dem zweiten Befestigungsbereich miteinander verspannt werden. Hierzu wird beispielsweise ein erstes Gewinde des ersten Befestigungsbereichs, welches bevorzugt an einer in Durchströmungsrichtung vorderen Stirnseite des bzw. der Zugankerausgebildet ist, mit einer vorderen, insbesondere vordersten Kompressorscheibe oder einer ersten Mutter verschraubt, die in Durchströmungsrichtung vor dieser Kompressorscheibe angeordnet ist und sich auf ihr abstützt.

Anschließend wird eine hintere, insbesondere hinterste Kompressorscheibe oder eine zweite Mutter, die in Durchströmungsrichtung hinter dieser Kompressorscheibe angeordnet ist und sich auf ihr abstützt, mit einem zweiten Gewinde des zweiten Befestigungsbereichs verschraubt, welches bevorzugt zwischen zwei Stirnseiten des bzw. der Zuganker ausgebildet ist.

Vorteilhafterweise kann der solcherart zwischen dem ersten und dem zweiten Befestigungsbereich verspannte Turbinenrotor, der bislang nur den Kompressorbereich aufweist, gewuchtet werden.

Anschließend können in einem weiteren Zwischenschritt eine oder mehrere, insbesondere alle Turbinenscheiben des Turbinenbereichs durch den oder die Zuganker miteinander bzw. mit axialen Anschlägen verspannt werden. Hierzu werden die Turbinenscheiben auf die Zugankeranordnung aufgesetzt und ein drittes Gewinde des dritten Befestigungsbereichs, welches bevorzugt an einer in Durchströmungsrichtung hinteren Stirnseite des bzw. der Zuganker ausgebildet ist, mit einer hinteren, bevorzugt hintersten Turbinenscheibe oder einer dritten Mutter verschraubt, die in Durchströmungsrichtung hinter dieser Turbinenscheibe angeordnet ist und sich auf ihr abstützt. Der solcherart verspannte, komplette Turbinenrotor, der nun sowohl den Kompressor- als auch den Turbinenbereich aufweist, kann erneut gewuchtet werden. Anschließend werden die Turbinenscheiben wieder von der Zugankeranordnung gelöst.

Nach diesem weiteren Zwischenschritt, der auch entfallen kann, wird der vorgespannte Turbinenrotor, der nur den Kompressorbereich aufweist, in einem Kompressorgehäuse, welches beispielsweise horizontal geteilt sein kann, angeordnet.

Nun wird ein, beispielsweise einteiliges, Turbinengehäuse aufgesetzt und mit dem Kompressorgehäuse verbunden, wobei die Turbinenscheiben wieder auf die Zugankeranordnung aufgesetzt und das dritte Gewinde mit der hinteren Turbinenscheibe bzw. der dritten Mutter verschraubt wird. Gleichermaßen können die einzelnen Turbinenscheibe auch im Wechsel mit dem Turbinengehäuse, das hierzu ein- oder mehrfach quer zur Längsachse geteilt sein kann, aufgesetzt und anschließend durch den dritten Befestigungsbereich miteinander verspannt werden.

Die Verspannung durch die Befestigungsbereiche kann dabei zusätzlich oder alternativ zu einer Gewindeverbindung auf durch andere Spannelemente realisiert werden, die die Kompressor- bzw. Turbinenscheiben axial gegeneinander verspannen können. Beispielsweise können der erste, zweite und/oder dritte Befestigungsbereich zusätzlich oder alternativ zu einem Gewinde radiale Aussparungen aufweisen, in die Keile eingeschlagen werden, welche aufgrund der Keilwirkung die Scheiben axial verspannen. Gleichermaßen können der erste, zweite und/oder dritte Befestigungsbereich zusätzlich oder alternativ auch Nuten zur Aufnahme axialer Sicherungsringe umfassen, die die Scheiben in einem axial vorgespannten Zustand fixieren.

Insbesondere bezeichnet ein Befestigungsbereich daher einen Abschnitt eines Zugankers bzw. einer Zugankeranordnung, an dem ein oder mehrere Spannelemente des Turbinenrotors wie etwa eine vordere oder hintere Kompressor- bzw. Turbinenscheibe bzw. eine Gewindemutter wenigstens einseitig axial derart festlegbar sind, dass sie eine Axialkraft in den Zuganker bzw. die Zugankeranordnung einleiten können, die Kompressor- bzw. Turbinenscheiben miteinander axial verspannt.

Ist dabei das Spannelement, welches zur Vorspannung des Kompressorbereiches dient, axial nur einseitig entgegen der Vorspannrichtung festlegbar, wie dies beispielsweise bei einer durch eine Gewindemutter einseitig abgestützten hinteren oder hintersten Kompressorscheibe der Fall ist, so kann die Verspannung des Kompressorbereiches bei über den dritten Befestigungsbereich vollständig verspanntem Turbinenrotor mit verspannten Turbinenscheiben teilweise oder vollständig auch über den dritten Befestigungsbereich und die Turbinenscheiben erfolgen, die sich ihrerseits über die Kompressorscheiben gegen den ersten Befestigungsbereich abstützen. Wenn hingegen bei axial nur einseitig entgegen festgelegtem, mit dem zweiten Befestigungsbereich zusammenwirkenden Spannelement die Vorspannung zwischen erstem und zweitem Befestigungsbereich größer ist als die Verspannung im Turbinenbereich, oder wenn dieses Spannelement axial beidseitig festlegbar ist, wie dies beispielsweise bei einer durch eine Gewindemutter gegen einen axialen Anschlag abgestützten hinteren oder hintersten Kompressorscheibe der Fall ist, so kann die Verspannung des Kompressorbereiches und des Turbinenbereiches weitgehend unabhängig voneinander erfolgen, indem die Kompressorscheiben zwischen dem ersten und zweiten Befestigungsbereich, die Turbinenscheiben zwischen zweitem und drittem Befestigungsbereich verspannt sind. In diesem Fall hebt beispielsweise auch eine axial nur einseitig durch eine Gewindemutter festgelegte hinterste Kompressorscheibe auch bei vollständig verspanntem Turbinenrotor mit verspannten Turbinenscheiben nicht von der Gewindemutter ab.

Die Befestigungsbereiche können daher bevorzugt so ausgelegt sein, dass auch bei verspanntem Turbinenbereich im Kompressorbereich selber eine Vorspannung verbleibt, die die Kompressorscheiben miteinander verspannt. Dies kann beispielsweise durch entsprechende axiale Abstände der Befestigungsbereich voneinander gezielt eingestellt werden. Die Vorspannung zwischen dem ersten und dem zweiten Befestigungsbereich, i.e. im Kompressorbereich, kann dabei bevorzugt höchstens das 10-fache, besonders bevorzugt höchstens das 5-fache und weiter bevorzugt höchstens das 3-fache der Vorspannung zwischen dem zweiten und dem dritten Befestigungsbereich, i.e. im Turbinenbereich betragen und andererseits größer als diese Vorspannung im Turbinenbereich sein.

Wie vorstehend erläutert, eignet sich ein erfindungsgemäßer Turbinenrotor insbesondere für Gasturbinen mit einem nicht durchgängig geteilten Gehäuse, i.e. Gasturbinen, die ein einteiliges oder in einer ersten, beispielsweise horizontalen Ebene geteiltes Kompressorgehäuse und ein mit dem Kompressorgehäuse verbundenes einteiliges oder in einer von der ersten Ebene verschiedenen zweiten Ebene, beispielsweise quer zur Längsachse oder vertikal geteiltes Turbinengehäuse aufweisen.

Weitere Merkmale und Vorteile ergeben sich aus den Unteransprüchen und dem nachfolgend erläuterten Ausführungsbeispiel. Hierzu zeigt, teilweise schematisiert:
- Fig. 1:: eine betriebsintern bekannte Gasturbine im oberen Längsschnitt; und
- Fig. 2:: eine Gasturbine nach einer Ausführung der vorliegenden Erfindung in Fig. 1 entsprechender Darstellung.

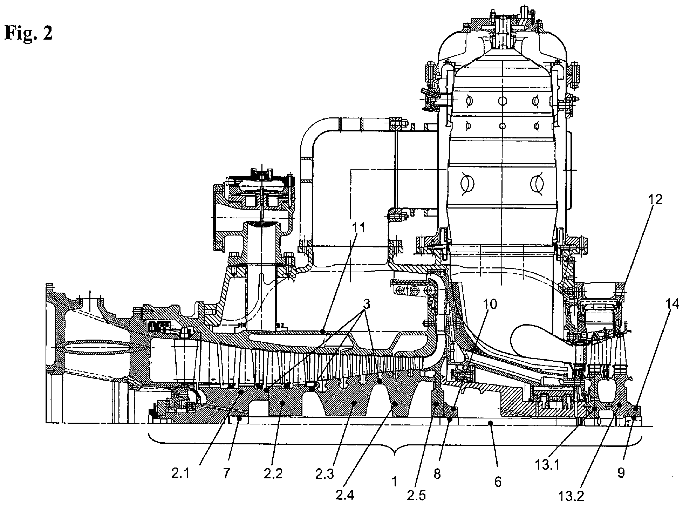

Fig. 2 zeigt eine Gasturbine nach einer Ausführung der vorliegenden Erfindung im oberen Längsschnitt. Sie umfasst einen Turbinenrotor 1 nach einer Ausführung der vorliegenden Erfindung, der in Scheibenbauweise aus mehreren Kompressorscheiben 2.1 bis 2.5 und mehreren Turbinenscheiben 13.1, 13.2 aufgebaut ist.

Alle Scheiben 2.1 bis 2.5, 13.1 und 13.2 sind durch einen einzigen zentralen Zuganker 6 miteinander verspannt. Hierzu weist der Zuganker 6 an seiner vorderen Stirnseite (links in Fig. 2) ein erstes Gewinde 7, an seiner hinteren Stirnseite (rechts in Fig. 2) ein drittes Gewinde 9 und zwischen den beiden Stirnseiten im Bereich der hintersten Kompressorscheibe 2.5 ein zweites Gewinde 8 auf. Während das erste Gewinde 7 in die in Durchströmrichtung der Gasturbine (von links nach rechts in Fig. 2) vorderste Kompressorscheibe 2.1 eingeschraubt ist, ist auf das zweite und dritte Gewinde 8, 9 jeweils in Durchströmrichtung gesehen von hinten eine zweite bzw. dritte Mutter 10 bzw. 14 durch eine hydraulische Spannvorrichtung (nicht dargestellt) aufgeschraubt, so dass durch die zweite Mutter 10 der Kompressorbereich, durch die dritte Mutter 14 der Turbinenbereich verspannt ist.

Dabei sind die Vorspannungen so gewählt, dass die zweite Mutter 10 auch bei verspannter dritter Mutter 14 noch unter Vorspannung steht und nicht von der hintersten Kompressorscheibe 2.5 abheben kann.

Die einzelnen Kompressorscheiben 2.1 bis 2.5 sind durch Hirth-Stirnverzahnungen 3 gegeneinander zentriert.

Zur Montage werden zunächst die Kompressorscheiben 2.1 bis 2.5 zusammengefügt und mittels Hirth-Stirnverzahnungen 3 gegeneinander zentriert. Anschließend wird der Zuganker 6 mit dem ersten Gewinde 7 in die vorderste Kompressorscheibe 2.1 eingeschraubt, die hierzu ein entsprechendes zentrisches Innengewinde aufweist. Über die zweite Mutter 10, die auf das zweite Gewinde 8 aufgeschraubt wird, wird der Zuganker 6 im Bereich zwischen erstem und zweitem Gewinde 7, 8 vorgespannt.

Danach wird der Rotor gewuchtet. Nach dem Wuchten des Rotors, der bisher nur den Kompressorbereich umfasst, werden die Turbinenscheiben 13.1, 13.2 auf den Zuganker 6 aufgeschoben und über die dritte Mutter 14, die auf das dritte Gewinde 9 aufgeschraubt wird, fixiert. Der Turbinenrotor 1 kann nun als Ganzes gewuchtet werden.

Anschließend werden die Turbinenscheiben 13.1, 13.2 nach Lösen der dritten Mutter 14 vom Zuganker 6 abgezogen und der Rotor, der nun nur den Kompressorbereich aufweist, von oben in ein horizontal geteiltes Kompressorgehäuse 11 eingelegt. Dieses wird geschlossen.

Nun werden die Turbinenscheiben 13.1, 13.2 im Wechsel mit einem einteiligen Turbinengehäuse 12 montiert, indem sie sukzessive auf den Zuganker 6 aufgesteckt werden. Nach der Montage der hintersten Turbinenscheibe 13.2 wird über die dritte Mutter 14, die auf das dritte Gewinde 9 aufgeschraubt wird, der Zuganker 6 auch im Bereich zwischen dem zweiten Gewinde 8 und dem dritten Gewinde 9 verspannt.

Dabei wird das Anzugsmoment der dritten Mutter 14 so gewählt, dass auch die zweite Mutter 10 vorgespannt bleibt, i.e. eine Normalkraft gegen die hinterste Kompressorscheibe 2.5 ausübt. Hierbei ist zu beachten, dass die Vorspannkraft der dritten Mutter 14 die Vorspannkraft der zweiten Mutter 10 entsprechend reduziert, da sie ebenfalls gegen das erste Gewinde 7 verspannt ist, i.e. im gesamten Zuganker 6 eine Zugkraft aufprägt. Durch entsprechende Wahl der Anzugsmomente der zweiten und dritten Mutter 10 bzw. 14 kann jedoch im Kompressorbereich eine größere Vorspannung als im Turbinebereich realisiert werden.

Wie sich aus vorstehender Darstellung ergibt, kann so vorteilhaft der gesamte Turbinenrotor mittels gemeinsamer Zuganker verspannt werden, ohne dass der Kompressorbereich mit zusätzlichen Werkzeugen fixiert werden muss, wenn die Gehäusekonstruktion keine Komplettmontage des Rotors außerhalb der Gasturbine gestattet.

Der Wuchtzustand des separat vorgewuchteten Kompressorbereichs bleibt vorteilhaft erhalten, da die Kompressorscheiben stets unter Vorspannung gehalten werden.

### Bezugszeichenliste

- 1,1': Turbinenrotor
- 2.1-2.5: Kompressorscheibe
- 3: Zentrierelement
- 4: Zuganker Kompressorbereich
- 5: Zuganker Turbinenbereich
- 6: zentraler Zuganker
- 7: erstes Gewinde
- 8: zweites Gewinde
- 9: drittes Gewinde
- 10: zweite Mutter
- 11: Kompressorgehäuse
- 12: Turbinengehäuse
- 13.1, 13.2: Turbinenscheibe
- 14: dritte Mutter

## Patentansprüche

1. Turbinenrotor (1) für eine Gasturbine, mit einem aus wenigstens zwei Kompressorscheiben (2.1 - 2.5) zusammengesetzten Kompressorbereich und einem Turbinenbereich mit wenigstens einer Turbinenscheibe (13.1 , 13.2), wobei die Kompressor- und Turbinenscheiben durch eine Zugankeranordnung mit wenigstens einem Zuganker (6) verspannt sind, **dadurch gekennzeichnet, dass** der Turbinenrotor einen ersten Befestigungsbereich (7), einen zweiten Befestigungsbereich (8) zur Verspannung von wenigstens zwei Kompressorscheiben zwischen dem ersten und dem zweiten Befestigungsbereich, und einen dritten Befestigungsbereich (9) zur Verspannung von wenigstens einer Turbinenscheibe aufweist, wobei der erste Befestigungsbereich ein erstes Gewinde (7) zum Verschrauben mit einer vorderen Kompressorscheibe (2.1) oder einer ersten Mutter aufweist, die in Durchströmungsrichtung vor einer vorderen Kompressorscheibe angeordnet ist und sich auf der vorderen Kompressorscheibe abstützt, und wobei der zweite Befestigungsbereich ein zweites Gewinde (8) zum Verschrauben mit einer hinteren Kompressorscheibe oder einer zweiten Mutter (10) aufweist, die in Durchströmungsrichtung hinter einer hinteren Kompressorscheibe (2.5) angeordnet ist und sich auf der hinteren Kompressorscheibe abstützt.

2. Turbinenrotor (1) nach Anspruch 1, **dadurch gekennzeichnet, dass** wenigstens ein Zuganker (6) der Zugankeranordnung zwischen dem ersten und dem dritten Befestigungsbereich einteilig ausgebildet ist.

3. Turbinenrotor (1) nach einem der vorhergehenden Ansprüche, **dadurch gekennzeichnet, dass** der dritte Befestigungsbereich ein, insbesondere an einer in Durchströmungsrichtung hinteren Stirnseite der Zugankeranordnung angeordnetes, drittes Gewinde (9) zum Verschrauben mit einer hinteren Turbinenscheibe oder einer dritten Mutter (14) aufweist, die in Durchströmungsrichtung hinter einer hinteren Turbinenscheibe (13.2) angeordnet ist und sich auf der hinteren Turbinenscheibe abstützt.

4. Turbinenrotor (1) nach einem der vorhergehenden Ansprüche, **dadurch gekennzeichnet, dass** eine Vorspannung zwischen dem ersten und dem zweiten Befestigungsbereich größer als die Verspannung der Turbinenscheiben und kleiner als das 10-fache, bevorzugt kleiner als das 5-fache und besonders bevorzugt kleiner als das 3-fache der Verspannung der Turbinenscheiben ist.

5. Turbinenrotor (1) nach einem der vorhergehenden Ansprüche, **dadurch gekennzeichnet, dass** wenigstens zwei Kompressorscheiben (2.1 - 2.5) und/oder wenigstens zwei Turbinenscheiben jeweils mittels eines Zentrierelementes (3) gegeneinander zentriert sind.

6. Turbinenrotor (1) nach Anspruch 5, **dadurch gekennzeichnet, dass** das Zentrierelement eine Stirnverzahnung, insbesondere eine Hirth-Verzahnung (3) oder eine Gleason-Verzahnung aufweist.

7. Gasturbine mit einem einteiligen oder in einer ersten Ebene geteilten Kompressorgehäuse (11), einem mit dem Kompressorgehäuse (11) verbundenen einteiligen oder in einer von der ersten Ebene verschiedenen zweiten Ebene geteilten Turbinengehäuse (12) und einem Turbinenrotor (1) nach einem der vorhergehenden Ansprüche.

8. Verfahren zur Montage eines Turbinenrotor (1) nach einem der vorhergehenden Ansprüche 1-6 in einer Gasturbine nach Anspruch 7, mit den Schritten
a) Verspannen von wenigstens zwei Kompressorscheiben (2.1 - 2.5) zwischen dem ersten und dem zweiten Befestigungsbereich durch die Zugankeranordnung;
f) Anordnen der verspannten Kompressorscheiben in dem Kompressorgehäuse (11); und
g) Verspannen von wenigstens einer Turbinenscheibe (13.1 , 13.2).

9. Verfahren nach Anspruch 8, **gekennzeichnet durch** den Schritt:
b) Wuchten des Turbinenrotors (1) vor dem Verspannen der Turbinenscheiben (13.1 , 13.2).

10. Verfahren nach einem der vorhergehenden Ansprüche 8 bis 9, **gekennzeichnet durch** die Schritte:
c) Verspannen von wenigstens einer Turbinenscheibe (13.1 , 13.2);
d) Wuchten des Turbinenrotors (1); und
e) Lösen der Turbinenscheiben von der Zugankeranordnung vor dem Anordnen der verspannten Kompressorscheibe (2.1 - 2.5) in dem Kompressorgehäuse (11).

11. Verfahren nach einem der vorhergehenden Ansprüche 8 bis 10, **dadurch gekennzeichnet, dass** die wenigstens zwei Kompressorscheiben (2.1 - 2.5) und/oder die wenigstens eine Turbinenscheibe (13.1 , 13.2) mittels einer hydraulischen Spanvorrichtung und/oder drehmomentgesteuert verspannt werden.

## Claims

1. A turbine rotor (1) for a gas turbine, with a compressor region composed of at least two compressor discs (2.1 - 2.5) and a turbine region with at least one turbine disc (13.1, 13.2), wherein the compressor and turbine discs are braced by a tension rod arrangement having at least one tension rod (6), **characterized in that** the turbine rotor comprises a first fastening region (7), a second fastening region (8) for bracing at least two compressor discs between the first and the second fastening region, and a third fastening region (9) for bracing at least one turbine disc, wherein the first fastening region has a first thread (7) for screwing to a front compressor disc (2.1) or a first nut, which is arranged in flow direction upstream of a front compressor disc and supports itself on the front compressor disc, and wherein the second fastening region has a second thread (8) for screwing to a rear compressor disc or a second nut (10), which in flow direction is arranged downstream of a rear compressor disc (2.5) and supports itself on the rear compressor disc.

2. The turbine rotor (1) according to Claim 1, **characterized in that** at least one tension rod (6) of the tension rod arrangement between the first and the third fastening region is formed in one piece.

3. The turbine rotor (1) according to any one of the preceding claims, **characterized in that** the third fastening region has a third thread (9) which is arranged in particular on an in flow direction rear front side of the tension rod arrangement for screwing to a rear turbine disc or a third nut (14), which in flow direction is arranged downstream of a rear turbine disc (13.2) and supports itself on the rear turbine disc.

4. The turbine rotor (1) according to any one of the preceding claims, **characterized in that** a preload between the first and the second fastening region is greater than the bracing of the turbine discs and smaller than 10 times, preferably smaller than 5 times and particularly preferably smaller than 3 times the bracing of the turbine discs.

5. The turbine rotor (1) according to any one of the preceding claims, **characterized in that** at least two compressor discs (2.1 - 2.5) and/or at least two turbine discs are each centred against one another by means of a centring element (3).

6. The turbine rotor (1) according to Claim 5, **characterized in that** the centring element has a spur toothing, in particular a Hirth toothing (3) or a Gleason toothing.

7. A gas turbine with a compressor housing (11) that is in one piece or split in a first plane, a turbine housing (12) that is connected to the compressor housing (11) and is in one piece or split in a second plane that is distinct from the first plane and a turbine rotor (1) according to any one of the preceding claims.

8. A method for assembling a turbine rotor (1) according to any one of the preceding Claims 1 - 6 in a gas turbine according to Claim 7 with the steps
a) bracing at least two compressor discs (2.1 - 2.5) between the first and the second fastening region by the tension rod arrangement;
f) arranging the braced compressor discs in the compressor housing (11); and
g) bracing at least one turbine disc (13.1, 13.2).

9. The method according to Claim 8, **characterized by** the step:
b) balancing the turbine rotor (1) prior to the bracing of the turbine discs (13.1, 13.2).

10. The method according to any one of the preceding Claims 8 to 9, **characterized by** the steps:
c) bracing at least one turbine disc (13.1, 13.2);
d) balancing the turbine rotor (1); and
e) releasing the turbine discs from the tension rod arrangement prior to the arranging of the braced compressor disc (2.1 - 2.5) in the compressor housing (11).

11. The method according to any one of the preceding Claims 8 to 10, **characterized in that** the at least two compressor discs (2.1 - 2.5) and/or the at least one turbine disc (13.1, 13.2) are braced by means of a hydraulic clamping device and/or in a torque-controlled manner.

## Revendications

1. Rotor de turbine (1) pour une turbine à gaz, comportant une zone de compresseur composée d'au moins deux disques de compresseur (2.1-2.5) et une zone de turbine comportant au moins un disque de turbine (13.1, 13.2), dans lequel les disques de compresseur et turbine sont tendus par un dispositif de tirant d'ancrage comportant au moins un tirant d'ancrage (6), **caractérisé en ce que** le rotor de turbine présente une première zone de fixation (7), une deuxième zone de fixation (8) pour la tension d'au moins deux disques de compresseur entre la première et la deuxième zone de fixation, et une troisième zone de fixation (9) pour la tension d'au moins un disque de turbine, dans lequel la première zone de fixation présente un premier filetage (7) pour le vissage avec un disque de compresseur avant (2.1) ou un premier écrou, qui est disposé dans la direction d'écoulement avant un disque de compresseur avant et s'appuie sur le disque de compresseur avant, et dans lequel la deuxième zone de fixation présente un deuxième filetage (8) pour le vissage avec un disque de compresseur arrière ou un deuxième écrou (10), qui est disposé dans la direction d'écoulement derrière un disque de compresseur arrière (2.5) et s'appuie sur le disque de compresseur arrière.

2. Rotor de turbine (1) selon la revendication 1, **caractérisé en ce que** au moins un tirant d'ancrage (6) du dispositif de tirant d'ancrage est réalisé en un seul tenant entre la première et la troisième zone de fixation.

3. Rotor de turbine (1) selon une des revendications précédentes, **caractérisé en ce que** la troisième zone de fixation présente un troisième filetage (9), disposé notamment sur un côté frontal arrière dans la direction d'écoulement du dispositif de tirant d'ancrage ou un troisième écrou (14), qui est disposé dans la direction d'écoulement derrière un disque de turbine arrière (13.2) et s'appuie sur le disque de turbine arrière.

4. Rotor de turbine (1) selon une des revendications précédentes, caractérisé en ce une pré-tension entre la première et la deuxième zone de fixation est plus grande que la tension des disques de turbine et plus petite que 1/10ème, de préférence plus petite que 1/5ème et de manière particulièrement préférée plus petite que 1/3 de la tension des disques de turbine.

5. Rotor de turbine (1) selon une des revendications précédentes, **caractérisé en ce que** au moins deux disques de compresseur (2.1-2.5) et/ou au moins deux disques de turbine sont respectivement centrées l'un contre l'autre au moyen d'un élément centreur (3).

6. Rotor de turbine (1) selon la revendication 5, **caractérisé en ce que** l'élément centreur présente une enture avant, notamment une denture Hirth (3) ou une denture Gleason.

7. Turbine à gaz comportant un carter de compresseur (11) en un seul tenant ou divisé en un premier plan, un carter de turbine (12) en un seul tenant relié avec le carter de compresseur (11) ou divisé en un d'un deuxième plan différent du premier plan et un rotor de turbine (1) selon une des revendications précédentes.

8. Procédé de montage d'un rotor de turbine (1) selon une des revendications précédentes 1-6 dans une turbine à gaz selon la revendication 7, comportant les étapes consistant à :
a) tendre au moins deux disques de compresseur (2.1-2.5) entre la première et la deuxième zone de fixation au moyen du dispositif de tirant d'ancrage ;
f) disposer les disques de compresseur tendus dans le carter de compresseur (11) ; et
g) tendre au moins un disque de turbine (13.1, 13.2) .

9. Procédé selon la revendication 8, caractérisé » par l'étape consistant à :
b) équilibrer le rotor de turbine (1) avant la tension des disques de turbine (13.1, 13.2).

10. Procédé selon une des revendications précédentes 8 à 9, **caractérisé par** les étapes consistant à :
c) tendre au moins un disque de turbine (13.1, 13.2) ;
d) équilibrer le rotor de turbine (1) ; et
e) désolidariser les disques de turbine du dispositif de tirant d'ancrage avant de disposer les disques de compresseur tendus (2.1-2.5) dans le carter de compresseur (11).

11. Procédé selon une des revendications précédentes 8 à 10, **caractérisé en ce que** les au moins deux disques de compresseur (2.1-2.5) et/ou au moins un disque de turbine (13.1,13.2) sont tendus au moyen d'un dispositif tendeur hydraulique et/ou de manière commandée par couple de rotation.
